# EUROPÄISCHE PATENTANMELDUNG

(11) **EP 4 439 034 A1**
(43) Veröffentlichungstag der Anmeldung: **02.10.2024**
(21) Anmeldenummer: 24160486.7
(22) Anmeldetag: 29.02.2024
(51) Int. Cl.: G01L 19/00, G01L 19/14, H05K 5/00, H05K 9/00, G01L 19/06

(54) **SCHUTZABDECKUNG UND MESSEINHEIT MIT EINER SOLCHEN**

(30) Priorität: 27.03.2023 DE 102023107689
(71) Anmelder: VEGA Grieshaber KG, 77709 Wolfach (DE)
(72) Erfinder: JACOB, Jörn, 77709 Wolfach (DE); KOPP, Thomas, 77709 Wolfach (DE); MELLERT, Martin, 77790 Steinach (DE); HUBER, Jochen, 77709 Wolfach (DE); HAAS, Maximilian, 78733 Aichhalden (Rötenberg) (DE)
(74) Vertreter: Maiwald GmbH

(57) **Zusammenfassung**

Schutzabdeckung für eine elektronische Vorrichtung, insbesondere einer Messzelle, vorzugsweise einer keramischen Druckmesszelle, umfassend: zumindest ein Verbindungselement (11), das dazu eingerichtet ist, eine Datenverbindung bereitzustellen; wobei die Schutzabdeckung (10) eine elektrische Schaltung (12) umfasst, insbesondere eine anwendungsspezifische integrierte Schaltung.

## Beschreibung

### BEZUGNAHME AUF VERWANDTE ANMELDUNGEN

Die vorliegende Anmeldung beansprucht die Priorität der deutschen Patentanmeldung Nr. 10 2023 107 689.2, eingereicht am 27. März 2023, die in vollem Umfang durch Bezugnahme in das vorliegende Dokument aufgenommen wird.

### GEBIET DER ERFINDUNG

Die vorliegende Erfindung betrifft eine Schutzabdeckung für eine elektronische Vorrichtung, insbesondere einer Messvorrichtung, vorzugsweise einer keramischen Druckmesszelle, und eine Messeinheit, insbesondere eine keramische Druckmesszelle, mit einer solchen Schutzabdeckung.

### HINTERGRUND

In der Prozessindustrie finden Messsensoren in vielen unterschiedlichen Bereichen Anwendung. Beispielsweise werden mit der Druckmessung mittels Druckmesszellen neben dem Prozess- oder Differenzdruck auch Füllstand, Volumen, Dichte oder Durchfluss in allen Bereichen der Verfahrens- und Prozessmesstechnik gemessen. Die Messbereiche der Drucksensoren beginnen bei wenigen mbar - sie bewältigen aber auch extreme Drücke bis zu 1.000 bar. Bei der Druckmessung kommen unterschiedliche Messzellen zum Einsatz. Beispielsweise können keramische Druckmesszellen verwendet werden. Solche Messzellen werden somit häufig in Bereichen angewandt, in denen diese mechanisch oder durch Korrosion beschädigt werden können.

Es hat sich herausgestellt, dass ein Bedarf besteht, eine weitere Schutzabdeckung für eine elektronische Vorrichtung, insbesondere eine Druckmesszelle, bereitzustellen.

Es ist Aufgabe der vorliegenden Erfindung eine Schutzabdeckung für eine elektronische Vorrichtung, insbesondere für eine keramische Druckmesszelle, bereitzustellen.

Diese und andere Aufgaben, die beim Lesen der folgenden Beschreibung noch genannt werden oder vom Fachmann erkannt werden können, werden durch den Gegenstand der unabhängigen Ansprüche gelöst. Die abhängigen Ansprüche bilden den zentralen Gedanken der vorliegenden Erfindung in besonders vorteilhafterweise weiter.

### Zusammenfassung der Erfindung

Schutzabdeckung für eine elektronische Vorrichtung, insbesondere einer Messzelle, vorzugsweise einer keramischen Druckmesszelle, umfassend: zumindest ein Verbindungselement, das dazu eingerichtet ist, eine Datenverbindung bereitzustellen; wobei die Schutzabdeckung eine elektrische Schaltung umfasst, insbesondere eine anwendungsspezifische integrierte Schaltung.

Die Schutzabdeckung der vorliegenden Erfindung ist vorzugsweise zumindest teilweise aus einem Kunststoff gefertigt. Die Schutzabdeckung weist das Verbindungselement auf, um Daten, beispielsweise Messdaten, weiterzugeben. Das Verbindungselement, kann beispielsweise als ein Stecker oder eine Buchse ausgebildet sein.

Die Schutzabdeckung umfasst ferner die elektrische Schaltung. Die elektrische Schaltung ist vorzugsweise als eine anwendungsspezifische integrierte Schaltung ausgebildet. Anders gesagt, ist die elektrische Schaltung ein Application Specific Integrated Circuit (ASIC). Andere elektrische Schaltungstypen sind ebenfalls denkbar.

Die Schutzabdeckung gemäß der vorliegenden Erfindung ermöglicht eine kompaktere Bauform, da die Elektronik bzw. Schaltung in der Schutzabdeckung angeordnet ist. Dadurch ist es möglich, Kosten und Material einzusparen. Dies ist ferner vorteilhaft, da der Raum, der zu Montage der Messzelle oftmals begrenzt sein kann. Durch die Schutzabdeckung sind die elektrische Schaltung bzw. die Elektronik vor Schäden durch mechanische oder chemische Einwirkungen geschützt.

In einer Ausführungsform ist das Verbindungselement dazu eingerichtet, eine Datenverbindung zu der elektrischen Schaltung bereitzustellen, insbesondere zu der anwendungsspezifischen integrierten Schaltung.

In einer Ausführungsform umfasst die Schutzabdeckung zumindest teilweise einen elektrisch leitfähigen Bereich. Es ist möglich, dass die Schutzabdeckung mehrere elektrisch leitfähige Bereiche umfasst. Der elektrisch leitfähige Bereich dient beispielsweise als eine Masseanbindung. Ferner kann der elektrisch leitfähige Bereich dazu eingerichtet sein, die elektronische Schaltung vor elektromagnetische Strahlung zu schützen. Somit kann der elektrisch leitfähige Bereich dazu eingerichtet sein, die elektromagnetische Verträglichkeit (EMV) zu verbessern. Dazu kann der elektrisch leitfähige Bereich beispielsweise als ein Drahtgewebe ausgebildet sein.

In einer Ausführungsform umfasst elektrisch der leitfähige Bereich ein Metall und/oder einen elektrisch leitfähigen Kunststoff. Diese sind einfach zugängliche Materialien, um den elektrisch leitfähigen Bereich zu realisieren.

In einer Ausführungsform ist das Metall als ein Blechelement ausgebildet. Dieses ist eine weitere kostengünstige Möglichkeit, eine Metallisierung der Schutzabdeckung zu realisieren. Ferner kann dadurch die Stabilität der Schutzabdeckung verstärkt werden.

In einer Ausführungsform kann der leitfähige Bereich oder die leitfähigen Bereiche durch Einlegeelement bzw. Inlays aus Metall oder einem elektrisch leitfähigen Kunststoff realisiert sein.

In einer Ausführungsform ist der elektrisch leitfähige Bereich, insbesondere das Blechelement, gitterförmig. Beispielsweise kann der elektrisch leitfähige Bereich ein gitterförmiges Blechelement umfassen, das als Inlay eines Kunststoffteils in einem Spritzgussprozess umspritzt bzw. vergossen ist. Dadurch wird die elektromagnetische Verträglichkeit (EMV) verbessert.

In einer Ausführungsform umfasst das Metall Nickel oder eine Nickellegierung. Alternativ sind andere leitfähigen Metalle oder Legierungen möglich.

In einer Ausführungsform ist die Schutzabdeckung fluiddicht. Dadurch ist die elektrische Schaltung und das Innere der Messzelle, auf der die Schutzabdeckung angeordnet ist, von äußeren Einflüssen, insbesondere von Feuchtigkeit, geschützt.

In einer Ausführungsform ist die Schutzabdeckung dazu eingerichtet, mit einem Klebstoff, insbesondere einem elektrisch leitfähigen Kleber, verklebt zu werden.

Ein weiterer Aspekt der vorliegenden Erfindung betrifft eine Messeinheit, insbesondere eine keramische Druckmesszelle, mit einer Schutzabdeckung nach einem der vorhergehend genannten Ausführungsformen.

### Beschreibung der bevorzugten Ausführungsformen

Nachfolgend wird eine detaillierte Beschreibung der Figuren gegeben, darin zeigen:
- **Figur 1**: eine Schnittansicht einer Ausführungsform einer Schutzabdeckung; und
- **Figur 2**: eine perspektivische Schnittansicht der Schutzabdeckung gemäß Figur 1.

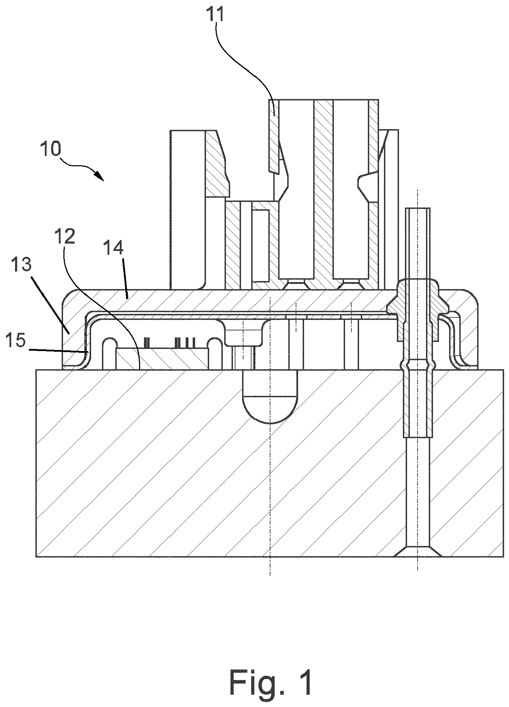

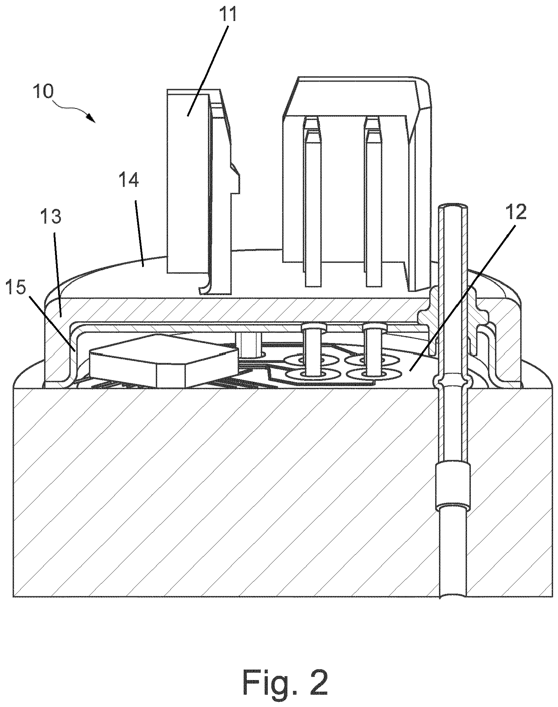

Figur 1 zeigt eine Schutzabdeckung 10 im montierten Zustand. Bei dem in Figur 1 und Figur 2 gezeigten Ausführungsbeispiel ist die Schutzabdeckung auf einer Messzelle angeordnet. Andere Verwendungen der Schutzabdeckung sind ebenfalls denkbar.

Die Schutzabdeckung 10 weist eine im wesentlichen hohlzylindrische Geometrie auf, wobei ein axiales Ende geschlossen ist. Genauer gesagt weist die Schutzabdeckung 10 im Schnitt eine U-förmige Geometrie auf. Die Schutzabdeckung 10 umfasst eine ringförmige Wandung 13, die an einem axialen Ende durch eine kreisförmige Wandung 14 geschlossen ist. Alternativ sind andere Formen für die Schutzabdeckung 10 denkbar. So kann die Schutzabdeckung 10 beispielsweise eine polygonale Form aufweisen.

Auf einer im montierten Zustand äußeren Fläche ist ein Verbindungselement 11 angeordnet. Das Verbindungselement 11 ist auf der kreisförmigen Wandung 14 angeordnet, welche das axiale Ende der Schutzabdeckung 10 bildet. Die kreisförmige Wandung 14 ist im montierten Zustand von der Messzelle abgewandt, an der die Schutzabdeckung 10 montiert ist.

Auf der im montierten Zustand inneren Seite weist die Schutzabdeckung 10 einen leitfähigen Bereich 15 auf. In der vorliegenden Ausführungsform ist der leitfähige Bereich 15 als eine Metallschicht 15 ausgebildet. Die Metallschicht 15 ist ein an die Innenseite der Schutzabdeckung 10 angeformtes Blech. Das bedeutet, dass das Blech an die Form der Schutz Abdeckung 10 angepasst ist. Das Blech weist Aussparungen für die Pins des Verbindungselement 11 auf. Die Metallschicht 15 umfasst vorzugsweise Nickel oder eine Nickellegierung. Alternativ sind andere Metalle bzw. Legierungen oder ein leitfähiger Kunststoff möglich. Der leitfähige Bereich kann andere Formen aufweisen. So ist es denkbar, dass der elektrisch leitfähige Bereich eine Gitterstruktur umfasst. Es ist ferner denkbar, dass der leitfähige Bereich in den Kunststoff, beispielsweise durch Spritzgießen, integriert ist.

Das Verbindungselement 11 ist als ein Stecker ausgebildet und umfasst vier Pins. Die vier Pins erstrecken sich durch die Schutzabdeckung 10 und sind mit einer elektrischen Schaltung 12, die hier als eine Platine ausgebildet ist, verbunden. Das Verbindungselement 11 ist dazu eingerichtet, Daten bzw. elektrische Signale von der elektrischen Schaltung 12 zu übertragen.

Die Schutzabdeckung 10 ist vorzugsweise an einer Messzelle angeklebt. Alternativ sind weitere kraftschlüssige, formschlüssige, oder stoffschlüssige Verbindungen möglich.

Die vorliegende Erfindung ist dabei allerdings nicht auf die vorhergehenden bevorzugten Ausführungsbeispiele beschränkt, solange sie vom Gegenstand der folgenden Ansprüche umfasst ist. Ergänzend wird darauf hingewiesen, dass die Begriffe "umfassend" und "aufweisend" keine anderen Elemente oder Schritte ausschließen und die unbestimmten Artikel "eine" oder "ein" keine Vielzahl ausschließen. Darüber hinaus wird darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

### Bezugszeichenliste

- **10**: Schutzabdeckung
- **11**: Verbindungselement
- **12**: elektrische Schaltung
- **13**: ringförmige Wandung
- **14**: kreisförmige Wandung
- **15**: leitfähiger Bereich

## Patentansprüche

1. Schutzabdeckung für eine elektronische Vorrichtung, insbesondere einer Messzelle, vorzugsweise einer keramischen Druckmesszelle, umfassend:
- zumindest ein Verbindungselement (11), das dazu eingerichtet ist, eine Datenverbindung bereitzustellen; wobei
- die Schutzabdeckung (10) eine elektrische Schaltung (12) umfasst, insbesondere eine anwendungsspezifische integrierte Schaltung.

2. Schutzabdeckung nach Anspruch 1, wobei das Verbindungselement dazu eingerichtet ist, eine Datenverbindung zu der elektrischen Schaltung bereitzustellen, insbesondere der anwendungsspezifischen integrierten Schaltung.

3. Schutzabdeckung nach Anspruch 1 oder 2, wobei die Schutzabdeckung zumindest teilweise einen leitfähigen Bereich (15) umfasst.

4. Schutzabdeckung nach Anspruch 3, wobei der leitfähige Bereich (15) ein Metall und/oder einen leitfähigen Kunststoff umfasst.

5. Schutzabdeckung nach Anspruch 4, wobei das Metall als ein Blechelement ausgebildet ist.

6. Schutzabdeckung nach Anspruch 4 oder 5, wobei der elektrisch leitfähige Bereich, insbesondere das Blechelement, gitterförmig ist.

7. Schutzabdeckung nach einem Ansprüche 4 bis 6, wobei das Metall Nickel oder eine Nickellegierung umfasst.

8. Schutzabdeckung nach einem der vorhergehenden Ansprüche, wobei die Schutzabdeckung (10) fluiddicht ist.

9. Schutzabdeckung nach einem der vorhergehenden Ansprüche, wobei die Schutzabdeckung (10) dazu eingerichtet ist, mit einem Klebstoff, insbesondere einem leitfähigen Kleber, verklebt zu werden.

10. Messeinheit, insbesondere eine keramische Druckmesszelle, mit einer Schutzabdeckung (10) nach einem der Ansprüche 1 bis 9.
